# EUROPÄISCHE PATENTANMELDUNG

(11) **EP 3 095 360 A1**
(43) Veröffentlichungstag der Anmeldung: **23.11.2016**
(21) Anmeldenummer: 15168159.0
(22) Anmeldetag: 19.05.2015
(51) Int. Cl.: A47J 31/06, A47J 31/44, A47G 21/18, B65D 85/808

(54) **TRINKGEFÄSSEINSATZ ZUR ZUBEREITUNG EINER FLÜSSIGKEIT IN EINEM TRINKGEFÄSS**

(71) Anmelder: Trajanov, Nikola, 5620 Bremgarten (CH)
(72) Erfinder: Trajanov, Nikola, 5620 Bremgarten (CH)
(74) Vertreter: Daub, Thomas

(57) **Zusammenfassung**

Trinkgefäßeinsatz (12) zur Zubereitung einer Flüssigkeit (20) in einem Trinkgefäß (10), mit einem Aufnahmecontainer (14), welcher dazu vorgesehen ist, in einem Bodenbereich des Trinkgefäßes (10) gehalten zu werden, welcher zumindest eine Öffnung (16) aufweist, und welcher zumindest ein Zubereitungsmittel (18) beinhaltet, welches dazu vorgesehen ist, in zumindest einem Zustand mit einer in das Trinkgefäß (10) eingefüllten Flüssigkeit (20) wechselzuwirken, und mit zumindest einer die Öffnung (16) begrenzenden Sperrschicht (22), welche dazu vorgesehen ist, den Aufnahmecontainer (14) in dem Trinkgefäß (10) luftdicht zu verschließen und ein ungewolltes Austreten des Zubereitungsmittels (18) zu verhindern.

## Beschreibung

### Stand der Technik

Es sind zahlreiche Tee- und Kaffeeprodukte zur Zubereitung einer Flüssigkeit bekannt, welche in ein Trinkgefäß eingebracht werden können und ein Zubereitungsmittel beinhalten, welches in zumindest einem Zustand mit der in das Trinkgefäß eingefüllten Flüssigkeit wechselwirkt. Diese Tee- und Kaffeeprodukte sind dabei jedoch nicht als Trinkgefäßeinsatz ausgebildet und insbesondere nicht luftdicht verschlossen, wie beispielsweise Teebeutel, und somit nicht aromaneutral in dem Trinkgefäß lagerbar und/oder müssen bereits vor einem Einbringen in das Trinkgefäß aus einer luftdichten Verpackung entfernt werden.

Die Aufgabe der Erfindung besteht insbesondere darin, einen Trinkgefäßeinsatz mit einer verbesserten Handhabbarkeit bereitzustellen. Die Aufgabe wird durch die Merkmale des Patentanspruchs 1 gelöst, während vorteilhafte Ausgestaltungen und Weiterbildungen der Erfindung den Unteransprüchen entnommen werden können.

### Vorteile der Erfindung

Trinkgefäßeinsatz zur Zubereitung einer Flüssigkeit in einem Trinkgefäß, mit einem Aufnahmecontainer, welcher dazu vorgesehen ist, in einem Bodenbereich des Trinkgefäßes gehalten und/oder fixiert zu werden, welcher zumindest eine, insbesondere beliebig geformte, Öffnung aufweist, und welcher zumindest ein Zubereitungsmittel beinhaltet, welches dazu vorgesehen ist, in zumindest einem Zustand mit einer in das Trinkgefäß eingefüllten Flüssigkeit wechselzuwirken und/oder zu reagieren, und mit zumindest einer die Öffnung begrenzenden Sperrschicht, welche dazu vorgesehen ist, den Aufnahmecontainer in dem Trinkgefäß, insbesondere zumindest anfänglich, vorteilhaft luftdicht, insbesondere aromadicht und/oder aromaneutral, zu verschließen und ein ungewolltes Austreten des Zubereitungsmittels zu verhindern. Vorteilhaft ist der Aufnahmecontainer dabei zumindest während eines Einfüllens der Flüssigkeit in das Trinkgefäß in dem Trinkgefäß angeordnet und insbesondere luftdicht verschlossen.

In diesem Zusammenhang soll unter einem "Trinkgefäßeinsatz" insbesondere ein Einlegeteil und/oder ein Einsatz verstanden werden, welches/welcher, insbesondere zur Bereitstellung einer Speise und/oder eines Getränks, in das Trinkgefäß einbringbar und/oder vollständig aus dem Trinkgefäß entnehmbar ist. Insbesondere ist der Trinkgefäßeinsatz von dem Trinkgefäß und/oder einem Teil des Trinkgefäßes verschieden. Das Trinkgefäß kann dabei als beliebiges, einem Fachmann als sinnvoll erscheinendes, Trinkgefäß ausgebildet sein, wie beispielsweise als Flasche, als Kelch, als Schale, als Krug, als Glas, als Becher und/oder als Tasse. Insbesondere weist das Trinkgefäß dabei einen, insbesondere unteren, vorteilhaft kreisförmigen, Standbereich auf, welcher es insbesondere ermöglicht, das Trinkgefäß auf einen Untergrund abzustellen und/oder einen, insbesondere umlaufenden, vorteilhaft kreisförmigen, oberen Rand und/oder zumindest einen Mantel, welcher sich insbesondere ausgehend von dem Standbereich in Richtung des oberen Rands erweitert und vorteilhaft den Standbereich mit dem oberen Rand verbindet. Insbesondere definieren und/oder begrenzen zumindest der Standbereich und der Mantel dabei einen Innenraum des Trinkgefäßes, insbesondere zum Aufnehmen und Abgeben einer Flüssigkeit. Im vorliegenden Fall kann die Flüssigkeit einer beliebigen Flüssigkeit entsprechen, wie beispielsweise Wasser, Milch, Suppe, Alkohol und/oder Saft.

Ferner kann der Aufnahmecontainer eine beliebige, einem Fachmann als sinnvoll erscheinende, Form und/oder Kontur aufweisen, wie beispielsweise kugelförmig, halbkugelförmig, ellipsoidenförmig, zylinderförmig, vorteilhaft kreiszylinderförmig, und/oder quaderförmig. Vorteilhaft ist der Aufnahmecontainer dabei zumindest im Wesentlichen formstabil ausgebildet. Alternativ ist jedoch auch denkbar, einen Aufnahmecontainer zumindest teilweise elastisch auszubilden, wie beispielsweise in Form eines Kissens und/oder eines Pads. Zudem weist der Aufnahmecontainer insbesondere zumindest eine Aufnahmekammer für zumindest ein Zubereitungsmittel auf. Das Zubereitungsmittel kann dabei, einem beliebigen Zubereitungsmittel entsprechen, wie beispielsweise einem pulverförmigen, flockenförmigen, granulatförmigen, faserförmigen, blattförmigen, zähflüssigen und/oder sirupartigen Mittel. Vorteilhaft handelt es sich bei dem Zubereitungsmittel um Tee, Kaffee, Kakao, Milchpulver, Suppen, Soßen und/oder andere Genussmittel. Auch ist denkbar, dass es sich bei dem Zubereitungsmittel um Medikamente, wie beispielsweise verdickter Hustensaft und/oder Tabletten, handelt. Zudem könnte ein Zubereitungsmittel auch Zusatzstoffe aufweisen, wie beispielsweise Zucker, Geschmacksverstärker, Schaumbildner und/oder andere Würzmittel. Auch könnte es sich bei dem Zubereitungsmittel um ein, insbesondere an Luft, flüchtiges, verderbliches und/oder seine Wirkung verlierendes Zubereitungsmittel und/oder um ein Gemisch aus zumindest zwei verschiedenen Stoffen, welche insbesondere lediglich innerhalb einer Flüssigkeit miteinander reagieren dürfen und/oder können, handeln.

Darüber hinaus soll unter einer "Sperrschicht" insbesondere ein Element, insbesondere ein Schichtelement, verstanden werden, welches dazu vorgesehen ist, die zumindest eine Öffnung, vorteilhaft sämtliche Öffnungen, des Aufnahmecontainers zu verschließen. Insbesondere ist die Sperrschicht fluidundurchlässig, insbesondere flüssigkeitsundurchlässig und gasundurchlässig, ausgebildet. Die Sperrschicht kann dabei einer beliebigen, einem Fachmann als sinnvoll erscheinenden, Sperrschicht entsprechen, wie beispielsweise einer Folie, insbesondere einer Aluminiumfolie, einer Kunststofffolie und/oder einem beschichteten Papier. Eine Materialstärke der Sperrschicht beträgt dabei insbesondere höchstens 1,5 mm, vorteilhaft höchstens 0,5 mm, vorzugsweise höchstens 0,1 mm und besonders bevorzugt höchstens 0,05 mm. Zusätzlich kann der Aufnahmecontainer zumindest eine, vorteilhaft innerhalb des Aufnahmecontainers angeordnete und/oder an die Sperrschicht angrenzende, weitere Sperrschicht aufweisen, welche zumindest teilweise flüssigkeitsdurchlässig ausgebildet ist, wie beispielsweise ein Filterpapier, ein Vlies, ein Gewebe, ein Gewirk und/oder eine Membran. Die weitere Sperrschicht verhindert vorteilhaft zumindest ein ungewolltes Austreten des Zubereitungsmittels. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Durch diese Ausgestaltung kann ein Trinkgefäßeinsatz bereitgestellt werden, welcher eine vorteilhafte Handhabbarkeit aufweist, wobei insbesondere ein Aromaverlust des Zubereitungsmittels vorteilhaft verhindert werden kann. Zudem kann ein Mischverhalten zwischen der Flüssigkeit und dem Zubereitungsmittel verbessert und/oder individuell an verschiedenste Bedürfnisse angepasst werden.

Die Sperrschicht könnte beispielsweise löslich ausgebildet sein und sich insbesondere bei Kontakt mit einer Flüssigkeit, vorteilhaft nach einer vorbestimmten und/oder vorbestimmbaren Zeit, auflösen. Vorzugsweise ist die Sperrschicht jedoch lösbar mit dem Aufnahmecontainer verbunden und insbesondere an diesem befestigt. Die Sperrschicht kann dabei insbesondere vor, während oder vorteilhaft nach einem Einfüllen der Flüssigkeit in das Trinkgefäß entfernt werden. Hierdurch kann ein einfach aufgebauter und kostengünstiger Trinkgefäßeinsatz bereitgestellt werden.

Weist der Trinkgefäßeinsatz ein Öffnungsmittel auf, welches zumindest eine Wirkverbindung mit der Sperrschicht aufweist und dazu vorgesehen ist, bei einer Krafteinwirkung, vorteilhaft mittels einer von einem Benutzer ausgeübten Kraft, die Sperrschicht zumindest teilweise zu entfernen und/oder zu zerstören, kann bei einer Verwendung des Trinkgefäßeinsatzes insbesondere auf zusätzliche Werkzeuge verzichtet werden.

Das Öffnungsmittel könnte beispielsweise mittelbar an der Sperrschicht befestigt sein und/oder die Sperrschicht fluiddicht durchdringen. Vorteilhaft ist das Öffnungsmittel jedoch unmittelbar an der Sperrschicht befestigt. Hierdurch kann insbesondere eine aufzuwendende Kraft eines Benutzers, insbesondere zur Entfernung der Sperrschicht, minimiert werden.

In einer vorteilhaften Ausgestaltung der Erfindung wird vorgeschlagen, dass das Öffnungsmittel als Faden oder als Lasche ausgebildet ist. Hierdurch kann insbesondere eine konstruktiv einfache Ausgestaltung bereitgestellt und eine Kosteneffizienz verbessert werden. Insbesondere ist dabei denkbar, dass ein Benutzer dazu vorgesehen ist, den Faden und/oder die Lasche mittels eines geeigneten, insbesondere hackenförmigen, Mittels zu greifen.

Ferner wird vorgeschlagen, dass der Trinkgefäßeinsatz ein, vorteilhaft zumindest im Wesentlichen formstabiles, Haltemittel aufweist, welches mit dem Aufnahmecontainer verbunden und vorteilhaft an diesem befestigt ist und dazu vorgesehen ist, den Aufnahmecontainer zumindest bei einem Entfernen und/oder Zerstören der Sperrschicht im Bodenbereich zu halten, insbesondere selbsttätig und/oder mittels einer von einem Benutzer auf das Haltemittel ausgeübten Kraft. Das Haltemittel kann dabei insbesondere zumindest teilweise, vorteilhaft zu wenigstens einem Großteil und besonders bevorzugt vollständig, aus einem beliebigen einem Fachmann als sinnvoll erscheinenden Material bestehen, wie beispielsweise Holz und/oder vorteilhaft Kunststoff. Unter dem Ausdruck "zu wenigstens einem Großteil" soll dabei insbesondere zumindest 55 %, vorteilhaft zumindest 65 %, vorzugsweise zumindest 80 % und besonders bevorzugt zumindest 90 % verstanden werden. Hierdurch kann ein vorteilhaft einfaches Entfernen und/oder Zerstören der Sperrschicht erreicht werden.

Ein besonders stabiles Haltemittel kann insbesondere dann bereitgestellt werden, wenn das Haltemittel zumindest im Wesentlichen stabförmig ausgebildet ist.

Darüber hinaus wird vorgeschlagen, dass das Haltemittel eine Länge, insbesondere eine Haupterstreckungslänge, aufweist, welche sich zumindest bis zu einem oberen Rand des Trinkgefäßes erstreckt. Hierdurch kann ein Greifen und/oder Halten des Haltemittels durch einen Benutzer vorteilhaft vereinfacht werden.

In einer bevorzugten Ausgestaltung der Erfindung wird vorgeschlagen, dass das Haltemittel als Haltehacken ausgebildet ist. Hierdurch kann vorteilhaft eine Griffigkeit des Haltemittels verbessert werden.

Des Weiteren wird vorgeschlagen, dass das Haltemittel, insbesondere in einem eingelegten Zustand des Aufnahmecontainers in das Trinkgefäß, zumindest teilweise über einen oberen Rand des Trinkgefäßes geführt ist, wodurch insbesondere ein Hineinrutschen des Haltemittels in das Trinkgefäß verhindert werden kann.

Zusätzlich wird vorgeschlagen, dass das Haltemittel dazu vorgesehen ist, eine Rührhilfe auszubilden, wodurch vorteilhaft auf zusätzliche Rührmittel, wie beispielsweise einen Löffel, verzichtet werden kann. In diesem Zusammenhang ist insbesondere denkbar, dass das Haltemittel zumindest teilweise oder vollständig von dem Aufnahmecontainer lösbar ist. Das Haltemittel könnte dabei beispielsweise einen löslichen Abschnitt aufweisen, welcher sich insbesondere bei Kontakt mit einer Flüssigkeit, vorteilhaft nach einer vorbestimmten und/oder vorbestimmbaren Zeit, auflöst. Auch ist denkbar, dass das Haltemittel zumindest eine Sollbruchstelle aufweist, an welcher das Haltemittel, insbesondere mittels einer Krafteinwirkung, getrennt und/oder von dem Aufnahmecontainer gelöst werden kann. Alternativ und/oder zusätzlich ist insbesondere auch denkbar, an dem Haltemittel ein zusätzliches Rührmittel anzuordnen und/oder zu befestigen.

Ferner wird vorgeschlagen, dass das Haltemittel faltbar und/oder klappbar, insbesondere zusammenfaltbar und/oder zusammenklappbar, ausgebildet ist. Vorteilhaft weist das Haltemittel hierzu zumindest eine Kante, insbesondere Biegekante, vorteilhaft Faltkante und/oder Klappkante, und vorteilhaft zumindest zwei Kanten, insbesondere Biegekanten, vorteilhaft Faltkanten und/oder Klappkanten, auf, wodurch insbesondere ein Platzbedarf, insbesondere bei einem Transport und/oder einem Vertrieb, des Haltemittels reduziert werden kann. Dabei kann das Haltemittel zudem vorteilhaft zumindest eine Rasteinheit aufweisen, welche insbesondere dazu vorgesehen ist, das Haltemittel in zumindest einem Betriebszustand, insbesondere einem entfalteten und/oder aufgeklappten Zustand des Haltemittels, wieder zu stabilisieren und/oder zu festigen. Hierdurch kann insbesondere ein besonders platzsparender und vertriebsfreundlicher Trinkgefäßeinsatz bereitgestellt werden.

In einer besonders bevorzugten Ausgestaltung der Erfindung wird vorgeschlagen, dass das Öffnungsmittel mit dem Haltemittel verbunden ist. Hierdurch kann insbesondere ein Hineinrutschen des Öffnungsmittels in das Trinkgefäß vorteilhaft verhindert werden.

Das Öffnungsmittel könnte beispielsweise kraftschlüssig und/oder formschlüssig mit dem Haltemittel verbunden sein, wie beispielsweise durch eine Klemmverbindung. Vorteilhaft ist das Öffnungsmittel jedoch stoffschlüssig, beispielsweise mittels eines Tropfens eines Klebers, insbesondere zumindest temporär und insbesondere lösbar, mit dem Haltemittel verbunden. Hierdurch kann insbesondere ein vorteilhaft kostengünstiger und einfach herstellbarer Trinkgefäßeinsatz bereitgestellt werden.

Der erfindungsgemäße Trinkgefäßeinsatz soll hierbei nicht auf die oben beschriebene Anwendung und Ausführungsform beschränkt sein. Insbesondere kann der erfindungsgemäße Trinkgefäßeinsatz zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Trinkgefäß mit einem Trinkgefäßeinsatz in einer seitlichen Schnittdarstellung,
- Fig. 2: ein beispielhafter Trinkgefäßeinsatz in einer perspektivischen Teildarstellung,
- Fig. 3: ein abgetrenntes Haltemittel des Trinkgefäßeinsatzes und
- Fig. 4: der Trinkgefäßeinsatz in einem verpackten Zustand.

### Beschreibung der Ausführungsbeispiele

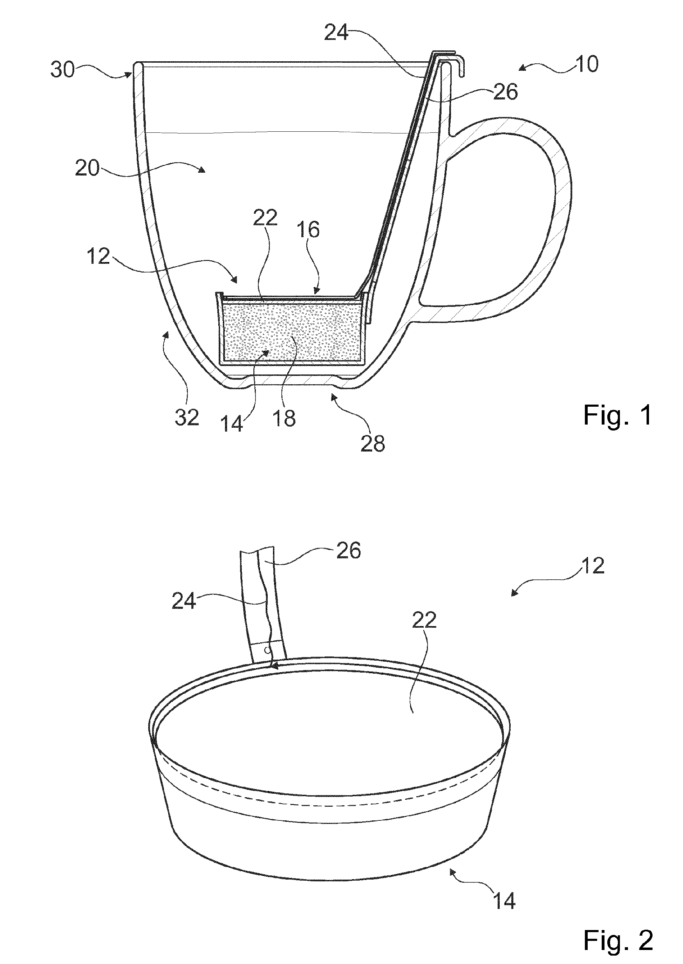

Figur 1 zeigt ein als Tasse ausgebildetes Trinkgefäß 10 in einer seitlichen Schnittdarstellung. Das Trinkgefäß 10 weist einen unteren Standbereich 28 auf. Der Standbereich 28 ist im vorliegenden Fall kreisförmig ausgebildet. Der Standbereich 28 ermöglicht das Trinkgefäß 10 auf einen Untergrund abzustellen. Ferner weist das Trinkgefäß 10 einen, insbesondere umlaufenden, oberen Rand 30 auf. Der Rand 30 ist kreisförmig ausgebildet. Zur Verbindung des Standbereichs 28 mit dem Rand 30 umfasst das Trinkgefäß 10 zudem einen Mantel 32, welcher sich ausgehend von dem Standbereich 28 in Richtung des Rands 30 erweitert.

Der Standbereich 28, der Mantel 32 und der Rand 30 definieren dabei einen Innenraum des Trinkgefäßes 10 zum Aufnehmen und Abgeben einer Flüssigkeit 20. Alternativ kann ein Standbereich und/oder ein Rand jedoch auch eine beliebige, einem Fachmann als sinnvoll erscheinende, von einer Kreisform abweichende Form aufweisen, wie beispielsweise elliptisch und/oder eckig. Auch ist denkbar, dass ein Trinkgefäß mehrere Mäntel aufweist und somit insbesondere mehrwandig, insbesondere doppelwandig, ausgebildet ist, wodurch ein Abkühlung und/oder Erhitzung einer Flüssigkeit zumindest reduziert werden kann.

Das Trinkgefäß 10 umfasst ferner einen Trinkgefäßeinsatz 12 (vgl. auch Figur 2). Der Trinkgefäßeinsatz 12 ist als Einlegeteil ausgebildet und ist in das Trinkgefäß 10 einlegbar und vollständig aus dem Trinkgefäß 10 entnehmbar. Der Trinkgefäßeinsatz 12 ist dabei zur Zubereitung einer Speise oder eines Getränks vorgesehen. Der Trinkgefäßeinsatz 12 umfasst einen Aufnahmecontainer 14, welcher in einem Bodenbereich des Trinkgefäßes 10 angeordnet ist. Der Aufnahmecontainer 14 ist anfänglich und insbesondere in einem in das Trinkgefäß 10 eingelegten Zustand, luftdicht verschlossen. Der Aufnahmecontainer 14 weist im vorliegenden Fall eine zumindest im Wesentlichen kreiszylindrische Form auf. Darüber hinaus umfasst der Aufnahmecontainer 14 zumindest eine Aufnahmekammer. In der Aufnahmekammer ist ein Zubereitungsmittel 18, wie beispielsweise Teeblätter und/oder Kaffeepulver, angeordnet. Das Zubereitungsmittel 18 ist dazu vorgesehen, in zumindest einem Zustand mit der in das Trinkgefäß 10 eingefüllten Flüssigkeit 20 wechselzuwirken. Dazu weist der Aufnahmecontainer 14 zumindest eine Öffnung 16 auf. Die Öffnung 16 ist als Eintrittsöffnung für die Flüssigkeit 20 ausgebildet. Alternativ ist denkbar, eine Öffnung als Austrittsöffnung für ein Zubereitungsmittel auszubilden.

Zu einem, insbesondere luftdichten verschließen, der Öffnung 16 weist der Trinkgefäßeinsatz 12 ferner zumindest eine Sperrschicht 22 auf. Die Sperrschicht 22 ist fluidundurchlässig, insbesondere luftundurchlässig und flüssigkeitsundurchlässig. Die Sperrschicht 22 ist im vorliegenden Fall als Aluminiumfolie ausgebildet und weist eine Materialstärke von etwa 0,02 mm auf. Die Sperrschicht 22 verschließt den Aufnahmecontainer 14 aromaneutral und/oder aromadicht. Die Sperrschicht 22 verhindert ein Kontakt des Zubereitungsmittels 18 mit Luft. Zudem verhindert die Sperrschicht 22 ein ungewolltes Austreten des Zubereitungsmittels 18. Die Sperrschicht 22 ist dabei lösbar mit dem Aufnahmecontainer 14 verbunden.

Insbesondere kann ein Aufnahmecontainer auch mehrere Öffnungen, insbesondere zumindest zwei, zumindest drei und/oder zumindest vier Öffnungen aufweisen, mehrere Aufnahmekammern, insbesondere zumindest zwei, zumindest drei und/oder zumindest vier Aufnahmekammern, und/oder mehrere Zubereitungsmittel, insbesondere zumindest zwei, zumindest drei und/oder zumindest vier, insbesondere in unterschiedlichen Aufnahmekammern angeordnete, Zubereitungsmittel aufweisen, wodurch insbesondere ein Mischverhalten verschiedener Zubereitungsmittel beeinflusst werden kann. Zudem können Zubereitungsmittel vorteilhaft getrennt voneinander aufbewahrt werden und können erst bei Gebrauch miteinander reagieren und/oder sich vermischen. Dabei ist ferner denkbar, dass ein Trinkgefäßeinsatz auch mehrere, insbesondere nebeneinander und/oder übereinander angeordnete, Sperrschichten aufweist, wobei zumindest eine der Sperrschichten auch flüssigkeitsdurchlässig und insbesondere nicht entfernbar ausgebildet sein kann.

Zum Öffnen der Sperrschicht 22, insbesondere in einem eingelegten Zustand des Trinkgefäßeinsatzes 12 in das Trinkgefäß 10, weist der Trinkgefäßeinsatz 12 ferner ein Öffnungsmittel 24 auf. Das Öffnungsmittel 24 ist im vorliegenden Fall als Faden ausgebildet. Das Öffnungsmittel 24 erstreckt sich dabei ausgehend von dem Aufnahmecontainer 14 in Richtung des Rands 30. Insbesondere kann sich das Öffnungsmittel 24 auch zumindest teilweise über den Rand 30 erstrecken und/oder über den Rand 30 geführt sein. Das Öffnungsmittel 24 ist unmittelbar an der Sperrschicht 22 befestigt und entfernt die Sperrschicht 22 bei einer äußeren Krafteinwirkung, insbesondere bei einem Ziehen eines Benutzers, vollständig. Das Öffnungsmittel 24 erstreckt sich dabei in einem Bereich der Sperrschicht 22 in Umfangsrichtung des Aufnahmecontainers 14 vollständig um den Aufnahmecontainer 14. Alternativ ist denkbar, dass ein Öffnungsmittel eine Sperrschicht bei einer äußeren Krafteinwirkung, insbesondere bei einem Ziehen eines Benutzers, lediglich teilweise entfernt und/oder zerstört.

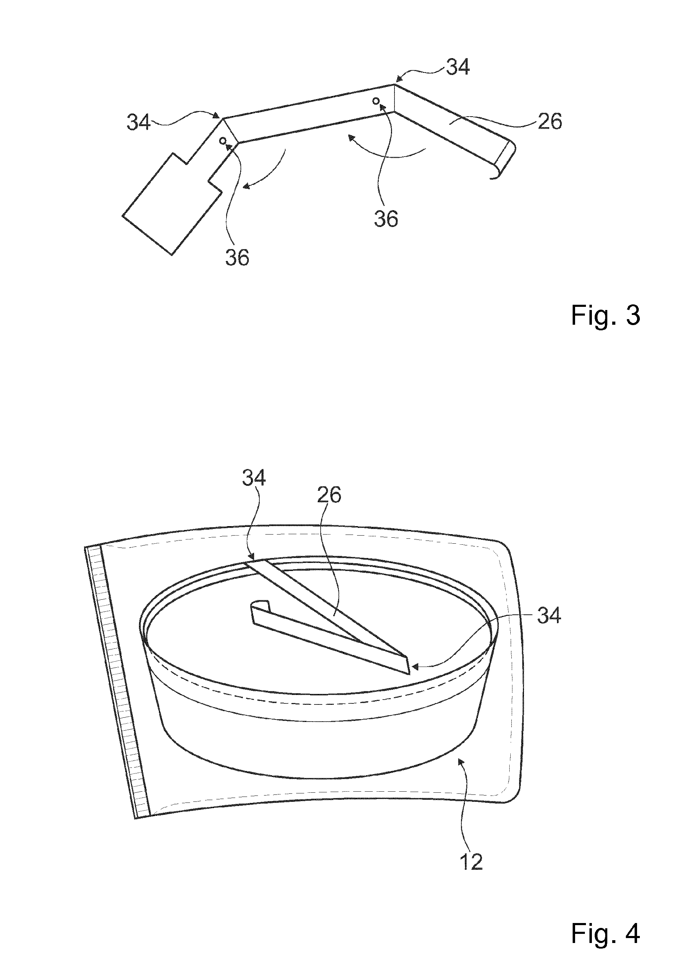

Ferner weist der Trinkgefäßeinsatz 12 ein Haltemittel 26 auf. Das Haltemittel 26 ist an dem Aufnahmecontainer 14 befestigt. Im vorliegenden Fall ist das Haltemittel 26 stoffschlüssig mit dem Aufnahmecontainer 14 verbunden. Alternativ könnte ein Haltemittel auch einstückig mit einem Aufnahmecontainer ausgebildet sein. Das Haltemittel 26 ist zumindest im Wesentlichen formstabil ausgebildet. Das Haltemittel 26 ist zumindest im Wesentlichen stabförmig ausgebildet. Das Haltemittel 26 weist dabei eine Länge auf, welche sich zumindest bis zum Rand 30 des Trinkgefäßes 10 erstreckt. Im vorliegenden Fall ist das Haltemittel 26 als Haltehacken ausgebildet und erstreckt sich ausgehend von dem Aufnahmecontainer 14 zumindest teilweise über den Rand 30. Das Haltemittel 26 weist dabei einen hackenförmigen Teil auf, welcher an dem Rand 30 eingehackt werden kann, sodass insbesondere ein Hineinrutschen des Haltemittels 26 in die Flüssigkeit 20 verhindert werden kann. Alternativ oder zusätzlich ist denkbar, dass ein Haltemittel an einem oberen Rand, insbesondere formschlüssig und/oder kraftschlüssig, befestigt werden kann, wodurch ein Öffnen weiter vereinfacht werden kann. Zudem ist das Öffnungsmittel 24 mit dem Haltemittel 26 verbunden. Die Verbindung ist dabei im Bereich des Rands 30 und/oder im Bereich des hackenförmigen Teils des Haltemittels 26 angeordnet. Im vorliegenden Fall ist das Öffnungsmittel 24 stoffschlüssig und insbesondere mittels eines Tropfens eines Klebers mit dem Haltemittel 26 verbunden. Das Öffnungsmittel 24 ist dabei lösbar mit dem Haltemittel 26 verbunden und kann somit insbesondere zu einem Entfernen der Sperrschicht 22 von einem Benutzer von dem Haltemittel 26 entfernt werden. Alternativ sind jedoch auch andere, einem Fachmann als sinnvoll erscheinende Befestigungsmöglichkeiten, denkbar. Das Haltemittel 26 ist zudem klappbar ausgebildet, wodurch vorteilhaft ein Platzbedarf des Haltemittels 26, insbesondere bei einem Vertrieb und/oder in einem verpackten Zustand, stark reduziert werden kann (vgl. insbesondere Figur 3). Hierzu weist das Haltemittel 26 zwei Kanten 34, insbesondere Klappkanten, auf, mittels welcher das Haltemittel 26 zusammenklappbar und/oder aufklappbar ist. Zur Formstabilisierung im aufgeklappten Zustand weist das Haltemittel 26 zudem zwei Rasteinheiten 36 auf. Die Rasteinheiten 36 sind im Wesentlichen zueinander identisch ausgebildet. Die Rasteinheiten 36 sind dabei jeweils in einem Nahbereich der Kanten 34 angeordnet. Die Rasteinheiten 36 umfassen jeweils ein erstes Rastelement und ein korrespondierendes zweites Rastelement, welche in zumindest einem Betriebszustand miteinander verrasten. Die ersten Rastelemente sind als Rastbolzen und die zweiten Rastelemente als korrespondierende Rastausnehmungen ausgebildet. Das Haltemittel 26 dient im vorliegenden Fall zudem als Rührhilfe, sodass auf zusätzliche Rührelemente, wie beispielsweise Löffel oder andere Gegenstände, verzichtet werden kann. Dazu kann das Haltemittel 26 von einem Benutzer bei Bedarf von dem Aufnahmecontainer 14 gelöst werden.

Figur 4 zeigt den Trinkgefäßeinsatz 12 in einem verpackten Zustand. Im vorliegenden Fall kann dabei eine besonders platzsparende und vertriebsfreundliche Ausgestaltung erreicht werden.

### Bezugszeichen

- 10: Trinkgefäß
- 12: Trinkgefäßeinsatz
- 14: Aufnahmecontainer
- 16: Öffnung
- 18: Zubereitungsmittel
- 20: Flüssigkeit
- 22: Sperrschicht
- 24: Öffnungsmittel
- 26: Haltemittel
- 28: Standbereich
- 30: Rand
- 32: Mantel
- 34: Kante
- 36: Rasteinheit

## Patentansprüche

1. Trinkgefäßeinsatz (12) zur Zubereitung einer Flüssigkeit (20) in einem Trinkgefäß (10), mit einem Aufnahmecontainer (14), welcher dazu vorgesehen ist, in einem Bodenbereich des Trinkgefäßes (10) gehalten zu werden, welcher zumindest eine Öffnung (16) aufweist, und welcher zumindest ein Zubereitungsmittel (18) beinhaltet, welches dazu vorgesehen ist, in zumindest einem Zustand mit einer in das Trinkgefäß (10) eingefüllten Flüssigkeit (20) wechselzuwirken, und mit zumindest einer die Öffnung (16) begrenzenden Sperrschicht (22), welche dazu vorgesehen ist, den Aufnahmecontainer (14) in dem Trinkgefäß (10) zu verschließen und ein ungewolltes Austreten des Zubereitungsmittels (18) zu verhindern.

2. Trinkgefäßeinsatz (12) nach Anspruch 1, **dadurch gekennzeichnet, dass** die Sperrschicht (22) lösbar mit dem Aufnahmecontainer (14) verbunden ist.

3. Trinkgefäßeinsatz (12) nach Anspruch 1 oder 2, **gekennzeichnet durch** ein Öffnungsmittel (24), welches zumindest eine Wirkverbindung mit der Sperrschicht (22) aufweist und dazu vorgesehen ist, bei einer Krafteinwirkung die Sperrschicht (22) zumindest teilweise zu entfernen und/oder zu zerstören.

4. Trinkgefäßeinsatz (12) nach Anspruch 3, **dadurch gekennzeichnet, dass** das Öffnungsmittel (24) unmittelbar an der Sperrschicht (22) befestigt ist.

5. Trinkgefäßeinsatz (12) nach Anspruch 4 oder 5, **dadurch gekennzeichnet, dass** das Öffnungsmittel (24) als Faden oder als Lasche ausgebildet ist.

6. Trinkgefäßeinsatz (12) nach einem der vorhergehenden Ansprüche, **gekennzeichnet durch** ein Haltemittel (26), welches mit dem Aufnahmecontainer (14) verbunden ist und dazu vorgesehen ist, den Aufnahmecontainer (14) zumindest bei einem Entfernen und/oder Zerstören der Sperrschicht (22) im Bodenbereich zu halten.

7. Trinkgefäßeinsatz (12) nach Anspruch 6, **dadurch gekennzeichnet, dass** das Haltemittel (26) zumindest im Wesentlichen stabförmig ausgebildet ist.

8. Trinkgefäßeinsatz (12) nach Anspruch 6 oder 7, **dadurch gekennzeichnet, dass** das Haltemittel (26) eine Länge aufweist, welche sich zumindest bis zu einem oberen Rand (30) des Trinkgefäßes (10) erstreckt.

9. Trinkgefäßeinsatz (12) nach einem der Ansprüche 6 bis 8, **dadurch gekennzeichnet, dass** das Haltemittel (26) als Haltehacken ausgebildet ist.

10. Trinkgefäßeinsatz (12) nach einem der Ansprüche 6 bis 9, **dadurch gekennzeichnet, dass** das Haltemittel (26) zumindest teilweise über einen oberen Rand (30) des Trinkgefäßes (10) geführt ist.

11. Trinkgefäßeinsatz (12) nach einem der Ansprüche 6 bis 10, **dadurch gekennzeichnet, dass** das Haltemittel (26) dazu vorgesehen ist, eine Rührhilfe auszubilden.

12. Trinkgefäßeinsatz (12) zumindest nach Anspruch 3 und 10, **dadurch gekennzeichnet, dass** das Öffnungsmittel (24) mit dem Haltemittel (26) verbunden ist.

13. Trinkgefäßeinsatz (12) nach Anspruch 12, **dadurch gekennzeichnet, dass** das Öffnungsmittel (24) stoffschlüssig mit dem Haltemittel (26) verbunden ist.

14. Trinkgefäß (10) mit zumindest einem Trinkgefäßeinsatz (12) nach einem der vorhergehenden Ansprüche.
